# EUROPEAN PATENT APPLICATION

(11) **EP 2 257 098 A1**
(43) Date of publication of application: **01.12.2010**
(21) Application number: 09724340.6
(22) Date of filing: 26.03.2009
(51) Int. Cl.: H04W 28/04, H04L 1/16

(54) **RADIO COMMUNICATION SYSTEM, RADIO COMMUNICATION DEVICE AND RADIO COMMUNICATION METHOD**

(30) Priority: 26.03.2008 JP 2008081380
(71) Applicant: Kyocera Corporation, Kyoto-shi Kyoto 612-8501 (JP)
(72) Inventor: SAHARA, Toru, Yokohama-shi Kanagawa (JP); TAKAMATSU, Nobuaki, Yokohama-shi Kanagawa (JP)
(74) Representative: Schwabe - Sandmair - Marx
(86) International application number: PCT/JP2009/056176
(87) International publication number: WO 2009/119763

(57) **Abstract**

One object of the present invention is to improve stability of wireless communication by effectively requesting retransmission of data to a wireless communication device, which is a data transmission source, by switching ARQ and HARQ if an error has been detected in received data.

In the wireless communication system of the present invention, other wireless communication device (for example, base station 120) includes a transmission data maintaining unit 230, a data transmission unit 234, a retransmission request receiving unit 236, an HARQ data retransmission unit 238, and an ARQ data retransmission unit 240. A wireless communication device (for example, PHS terminal 110) includes a data receiving unit 330, a data demodulation unit 332, an error detection unit 336, a retransmission request selection unit 338, an HARQ processing unit 340 capable of making an HARQ retransmission request, and an ARQ processing unit 360 capable of making an ARQ retransmission request.

## Description

### Technical Field

The present invention relates to a wireless communication system that performs wireless communication, a wireless communication device and a wireless communication method, which perform wireless communication.

### Background Art

In recent years, as a mobile station represented by a PHS (Personal Handy phone System), a mobile phone system, and the like are widely used, and a telephone call or access to information becomes enabled, irrespective of time and place. In particular, nowadays, an amount of available information has been increasing. A high speed and high quality wireless communication method has been employed in order to download a large amount of data.

As a standard for next-generation PHS communication capable of performing high speed digital communication, for example, ARIB (Association of Radio Industries and Businesses) STD T95 or PHS MoU (Memorandum of Understanding) has been proposed. In such communication, an OFDM (Orthogonal Frequency Division Multiplexing) system is employed. The OFDM system is classified as one category of the multiplexing system and uses a plurality of carrier waves on a unit time axis, and frequency bands of the carrier waves are partly overlapped with one another so that the phases of signal waves to be modulated are orthogonal to each other in adjacent carrier waves so as to use the frequency band effectively.

In addition, while OFDM assigns sub channels by time division to individual users, there has been also proposed OFDMA (Orthogonal Frequency Division Multiplexing Access), which allows a plurality of users to share all sub channels and assigns sub channels having the highest transmission efficiency to each user.

In ARIB STD T95 or PHS MoU, in a case where a receiving device receives incorrect data, an automatic repeat request (hereinafter referred to as "ARQ") for requesting retransmission of the data is transmitted to the transmitting device that has transmitted the incorrect data. In response to such ARQ, the transmitting device performs retransmission of data to an MAC layer (low layer), so that the error can be effectively corrected for short control time (Non-Patent Literature 2). In addition, in ARIB STD T95 or PHS MoU, an HARQ (Hybrid ARQ) technique, which more improves packet error correction efficiency by combining such ARQ and FEC (Forward Error Correction), is also employed.
Non-Patent Literature 1: ARIB (Association of Wireless Industries and Businesses) STD-T95
Non-Patent Literature 2: A-GN4.00-01-TS Rev. 3 "Next Generation PHS Specifications," P331-340

### Disclosure of the Invention

### Problems that the Invention is to Solve

As described above, in ARIB STD T95 or PHS MoU, both ARQ and HARQ are adopted, and using them together is possible. However if an error is detected in data received by using ARQ and HARQ together, the receiving device transmits a retransmission request as a result of processing of ARQ and a retransmission request as a result of processing of HARQ to the transmitting device. Accordingly, the retransmission requests are overlapped, and the transmitting device repeatedly retransmits identical data in response to the retransmission requests as a result of processing of both the requests (ARQ and HARQ), so that redundancy is caused.

Moreover, if data transmitted by the transmitting device include numerous errors, both the retransmission requests are continuously transmitted, so that communication may be failed.

In consideration of this problem, an object of the present invention is to provide a wireless communication system, a wireless communication device, and a wireless communication method, in which if an error is detected in received data, ARQ and HARQ are switched to effectively request retransmission of data to a transmitting device, so that stability of wireless communication can be improved.

### Means for Solving the Problems

In order to solve the above-described problems, a representative configuration of a wireless communication system according to the present invention comprises: a first wireless communication device; and a second wireless communication device that performs wireless communication with the first wireless communication device, wherein the first wireless communication device comprises: a transmission data maintaining unit that maintains data in a frame unit; a data transmission unit that sequentially transmits the data; a retransmission request receiving unit that receives an HARQ retransmission request or an ARQ retransmission request transmitted from the second wireless communication device; an HARQ data retransmission unit which, if the retransmission request receiving unit has received an HARQ retransmission request, retransmits data corresponding to the HARQ retransmission request and maintained in the transmission data maintaining unit; and an ARQ data retransmission unit which, if the retransmission request receiving unit has received an ARQ retransmission request, retransmits data corresponding to the ARQ retransmission request and maintained in the transmission data maintaining unit, and wherein the second wireless communication device comprises: a data receiving unit that receives data transmitted from the first wireless communication device; a data demodulation unit that demodulates the received data; an error detection unit that detects whether or not there is an error in the demodulated data; an HARQ processing unit that is capable of making an HARQ retransmission request; an ARQ processing unit that is capable of making an ARQ retransmission request; and a retransmission request selection unit which, if the error detection unit has detected an error, selects either the HARQ processing unit or the ARQ processing unit to make an HARQ retransmission request or an ARQ retransmission request.

The second wireless communication device, which mainly receives data, includes an error detection unit and a retransmission request selection unit. According to this configuration, if an error is detected in data transmitted and received from a first wireless communication device, the second wireless communication device can operate only one of an HARQ processing unit and an ARQ processing unit. Accordingly, an HARQ retransmission request and an ARQ retransmission request are not repeatedly transmitted to the first wireless communication device, which is a data transmission source. According thereto, the first wireless communication device does not repeatedly transmit identical data.

Incidentally, selecting the HARQ processing unit or the ARQ processing unit by means of the retransmission request selection unit is performed based on whether or not a flag is standing in HC (HARQ Cancel) contained in an anchor channel (ANCH) transmitted by the first wireless communication device in the MoU standard. That is, if a flag is standing in HC, the retransmission request selection unit selects the ARQ processing unit. If no flag is standing in HC, the HARQ processing unit is selected.

The HARQ processing unit may comprise: an operation mode setting unit, which sets an operation mode of the HARQ processing unit to "in HARQ mode" or "HARQ abandonment," depending on which of the HARQ processing unit or the ARQ processing unit has been selected by the retransmission request selection unit, and which notifies the selection to the ARQ processing unit; and an HARQ transmission unit which, if the operation mode is set to "in HARQ mode," transmits the HARQ retransmission request to the first wireless communication device. The ARQ processing unit may comprise: an operation mode maintaining unit that maintains the notified operation mode; and an ARQ transmission unit which, if the maintained operation mode is modes other than "in HARQ mode," transmits the ARQ retransmission request to the first wireless communication device.

If the HARQ processing unit is selected, an operation mode indicating the selection is notified to the ARQ processing unit. According to this configuration, the ARQ processing unit can surely confirm that the HARQ processing unit has been selected. In addition, in the case where a maintained operation mode is modes other than "in HARQ mode," the ARQ transmission unit transmits an ARQ retransmission request to the first wireless communication device. As such, if the HARQ processing unit has been selected, namely, if a maintained operation mode is "in HARQ mode," an ARQ retransmission request is not transmitted to the first wireless communication device. Therefore, the retransmission request is not repeated.

On the other hand, if the ARQ processing unit is selected, namely, an operation mode setting unit sets an operation mode of the HARQ processing unit to "HARQ abandonment," an HARQ transmission unit does not transmit an HARQ retransmission request to the first wireless communication device. According to this configuration, the first wireless communication device recognizes that no error has been detected in the HARQ processing unit, in other words, the HARQ processing unit is normal. Thus, since a retransmission request is transmitted only from the ARQ processing unit, the first wireless communication device can retransmit data only in response to the ARQ retransmission request.

In order to solve the above-described problems, a representative configuration of a wireless communication device according to the present invention is a wireless communication device performing wireless communication with other wireless communication device, the wireless communication device comprising: a data receiving unit that receives data in a frame unit transmitted from the other wireless communication device; a data demodulation unit that demodulates the received data; an error detection unit that detects whether or not there is an error in the demodulated data; an HARQ processing unit that is capable of making an HARQ retransmission request; an ARQ processing unit that is capable of making an ARQ retransmission request; and a retransmission request selection unit which, if the error detection unit has detected an error, selects either the HARQ processing unit or the ARQ processing unit to make an HARQ retransmission request or an ARQ retransmission request.

The HARQ processing unit may comprise: an operation mode setting unit, which sets an operation mode of the ARQ processing unit to "in HARQ mode" or "HARQ abandonment," depending on which of the HARQ processing unit or the ARQ processing unit has been selected by the retransmission request selection unit, and which notifies the selection to the ARQ processing unit; and an HARQ transmission unit which, if the set operation mode is "in HARQ mode," transmits the HARQ retransmission request to the other wireless communication device. The ARQ processing unit may comprise: an operation mode maintaining unit that maintains the notified operation mode; and an ARQ transmission unit which, if the maintained operation mode is modes other than "in HARQ mode," transmits the ARQ retransmission request to the other wireless communication device.

In order to solve the above-described problems, a representative configuration of a wireless communication method according to the present invention is a wireless communication method of performing wireless communication by using a first wireless communication device and a second wireless communication device that performs wireless communication with the first wireless communication device, wherein the first wireless communication device is configured to: maintain data in a frame unit; and sequentially transmit the data, wherein the second wireless communication device is configured to: receive the transmitted data; demodulate the received data; detect whether or not there is an error in the demodulated data; and if an error has been detected in the data, make an HARQ retransmission request or an ARQ retransmission request, and wherein the first wireless communication device is configured to: receive the HARQ retransmission request or the ARQ retransmission request; if the HARQ retransmission request has been received, retransmit the maintained data as data in response to the HARQ retransmission request; and if the ARQ retransmission request has been received, retransmit the maintained data as data in response to the ARQ retransmission request.
Incidentally, a representative example of the first wireless communication device is a base station, and a representative example of the second wireless communication device is a mobile communication terminal. However, the present invention is not limited to these examples.

The components or the descriptions thereof, which correspond to the technical concept of the above-described wireless communication system, are applicable to the corresponding wireless communication device and wireless communication method.

### Advantage of the Invention

As described above, in the wireless communication system of the present invention, if an error is detected in received data, ARQ and HARQ are switched to effectively request retransmission of data to a wireless communication device, which is a data transmission source, so that stability of wireless communication can be improved.

### Brief Description of Drawings

[FIG. 1] A view for explaining general connection relation of a wireless communication system.
[FIG. 2] A block diagram showing general configuration of a base station.
[FIG. 3] A view for explaining a frame in an embodiment of the present invention.
[FIG. 4] A functional block diagram showing hardware configuration of a PHS terminal.
[FIG. 5] A perspective view showing appearance of the PHS terminal.
[FIG. 6] A view for explaining performance of chase combining.
[FIG. 7] A flow chart showing a flow of processes of a wireless communication method according to the embodiment of the present invention.
[FIG. 8] A flow chart showing a flow of processes of the wireless communication method in a comparative embodiment.

### Description of Reference Numerals

100 ··· wireless communication system, 110 ··· PHS terminal, 120 ··· base station, 130 ··· communication network, 140 ··· relay server, 210 ··· base station control unit, 212 ··· base station memory, 214 ··· base station wireless communication unit, 216 ··· base station wired communication unit, 230 ··· transmission data maintaining unit, 232 ··· data modulation unit, 234 ··· data transmission unit, 236 ··· retransmission request receiving unit, 238 ··· HARQ data retransmission unit, 240 ... ARQ data retransmission unit, 310 ··· terminal control unit, 312 ··· terminal memory, 314 ··· display unit, 316 ··· operation unit, 318 ··· voice input unit, 320 ··· voice output unit, 322 ··· terminal wireless communication unit, 330 ··· data receiving unit, 332 ··· data demodulation unit, 334 ··· error correction unit, 336 ··· error detection unit, 338 ··· retransmission request selection unit, 340 ··· HARQ processing unit, 344 ··· data storing unit, 346 ··· operation mode setting unit, 348 ··· HARQ transmission unit, 350 ··· PHY payload transmission unit, 352 ··· data combining unit, 354 ··· data deletion unit, 360 ··· ARQ processing unit, 362 ··· PHY payload receiving unit, 364 ··· sequence number storing unit, 368 ··· operation mode maintaining unit, 370 ··· ARQ transmission unit, 550 ··· retransmission data, 552 ··· data being maintained, 554 ··· restored data

### Best Mode for Carrying Out the Invention

Hereinafter, a preferable embodiment of the present invention will be described in detail with reference to the accompanying drawings. In such an embodiment, dimensions, materials, and other particular numerical values, etc., are merely exemplary to facilitate understanding of the invention and should not be construed as limiting the present invention thereto unless otherwise expressly described herein. Incidentally, in this specification and the drawings, components having substantially the same functions and configurations are denoted by the same reference numeral to omit repeated explanation, and components having no direct relation with the present invention are not illustrated.

Mobile stations (also referred to as mobile communication terminals), which are represented by PHS terminals, mobile phones, and the like, and base stations, which are fixedly arranged with certain intervals, construct a wireless communication system for performing wireless communication. In such a wireless communication system, both a base station and a mobile station function as a wireless communication device for transmitting and receiving data. In this embodiment, for easy understanding, the base station is explained as a wireless communication device, and the mobile station is explained as other wireless communication device. However, there is no need to say that the configuration can also be reversed. Herein, the entire wireless communication system will first be described, and thereafter detailed configuration of a base station and a PHS terminal as a mobile station will be described. In addition, although this embodiment describes a PHS terminal as an example of a mobile station, the mobile station is not limited thereto and may include various electronic devices capable of performing wireless communication, such as mobile phones, notebook-type personal computers, PDAs (Personal Digital Assistant), digital cameras, music players, car navigators, portable televisions, game devices, DVD players, and remote controllers.

### (Embodiment: Wireless Communication System 100)

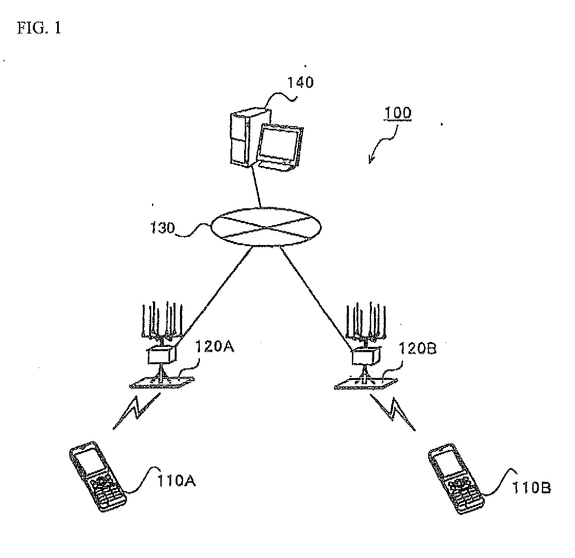

FIG. 1 is a view for explaining general connection relation of the wireless communication system 100. The wireless communication system 100 includes: PHS terminals 110 (110A, 110B); base stations 120 (120A, 120B); a communication network 130 including an ISDN (Integrated Services Digital Network) line, Internet, and a private line, and the like; and a relay server 140.

In the wireless communication system 100, when a user makes an access from his/her PHS terminal 110A to other PHS terminal 110B through a communication line, the PHS terminal 110A makes a request for wireless access to the base station 120A, which lies within communication coverage. Upon receiving the wireless access request, the base station 120A makes a request for communication access to a communication counterpart to the relay server 140 through the communication network 130. The relay server 140 selects, for example, the base station 120B, which lies within the wireless communication coverage of other PHS terminal 110B, and thereby securing a communication path between the base station 120A and the base station 120B to establish communication between the PHS terminal 110A and the PHS terminal 110B.

In this wireless communication system 100, various techniques to improve communication speed and communication quality of the PHS terminals 110 and the base stations 120 have been employed. In this embodiment, for example, a next generation PHS communication technique such as ARIB STD T95 or PHS MoU is employed, and wireless communication based on a TDD (Time Division Duplex)/OFDMA (or TDD/OFDM) scheme is performed between the PHS terminals 110 and the base stations 120.

In addition, in the wireless communication system 100, ARQ and HARQ are used. If an error is detected in data transmitted from the base station 120 and received in the PHS terminal 110, the PHS terminal 110 makes a retransmission request to the base station 120 by using either ARQ or HARQ to effectively request retransmission of data. According thereto, stability of wireless communication can be improved. Hereinafter, detailed configuration and operation will be described.

### (Base Station 120)

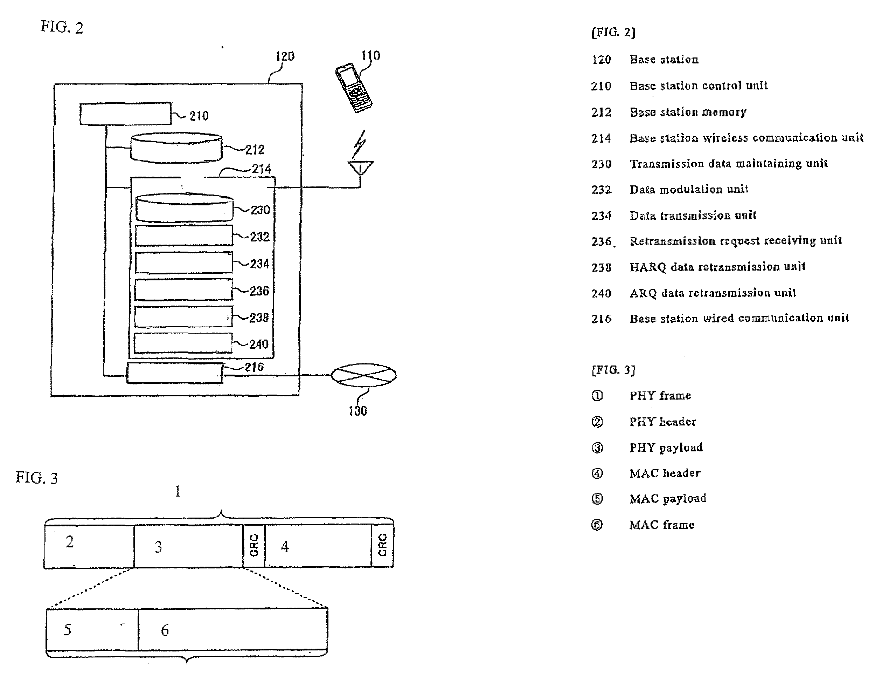

FIG. 2 is a block diagram showing general configuration of the base station 120. The base station 120 includes a base station control unit 210, a base station memory 212, a base station wireless communication unit 214, and a base station wired communication unit 216.

The base station control unit 210 manages and controls the base station 120 as a whole by means of a semiconductor integrated circuit including a central processing unit (CPU). In addition, the base station control unit 210 controls communication access to the communication network 130 of the PHS terminal 110 or other PHS terminal 110 by using a program of the base station memory 212.

The base station memory 212 is configured by ROM, RAM, EEPROM, non-volatile RAM, flash memory, HDD (Hard Disk Drive), and so on. The base station memory 212 stores programs processed in the base station control unit 210, time information, or others.

The base station wireless communication unit 214 establishes communication with the PHS terminal 110 and performs transmitting and receiving data.

The base station wired communication unit 216 may access various servers including the relay server 140 through the communication network 130.

In addition, in this embodiment, the base station wireless communication unit 214 also functions as a transmission data maintaining unit 230, a data modulation unit 232, a data transmission unit 234, a retransmission request receiving unit 236, an HARQ data retransmission unit 238, and an ARQ data retransmission unit 240.

The transmission data maintaining unit 230 maintains data in a frame unit, which are objects to be transmitted, and to which CRC (Cyclic Redundancy Check Bit) is assigned, in association with a frame identifier capable of specifying a frame of the data and a sequence number. In this embodiment, an "identifier" refers to indication, which can uniquely specify an object by means of numerals, alphabets, and symbols.

FIG. 3 is a view for explaining a fame in this embodiment. As shown in FIG. 3, a frame in this embodiment is a PHY frame and composed of a PHY header, a PHY payload, and CRC. The PHY header contains a frame identifier, and the PHY payload contains an MAC frame. The MAC frame contains an MAC payload containing an MAC header and data. Here, a frame identifier is contained in the PHY header and can be referenced in a PHY layer. On the other hand, a sequence number refers to a number indicating sequence of data and is contained in an MAC header of the MAC frame. Thus, the sequence number cannot be referenced in the PHY layer.

The data modulation unit 232 modulates a frame containing data, a frame identifier, and a sequence number, which are maintained in the transmission data maintaining unit 230, based on a modulation and coding scheme (MCS) determined by adaptive modulation and generates a baseband signal. Here, MCS is identical to MCS required by the PHS terminal 110 or MCS having low modulation efficiency.

In addition, when an HARQ retransmission request has been made from the PHS terminal 110, the data modulation unit 232 modulates an error part (retransmission data) of data maintained in the transmission data maintaining unit 230 and specified by a frame identifier and an error part identifier, which are objects of the HARQ retransmission request, based on MCS determined by adaptive modulation. Moreover, when an ARQ retransmission request has been made from the PHS terminal 110, the data modulation unit 232 modulates data (retransmission data) maintained in the transmission data maintaining unit 230 and specified by a sequence number, which is an object of the ARQ retransmission request, based on MCS determined by adaptive modulation.

The data transmission unit 234 sequentially transmits a frame containing the data modulated by the data modulation unit 232.

When there has been an HARQ retransmission request (NACK) from the PHS terminal 110, the retransmission request receiving unit 236 extracts a frame identifier of data, in which an error has been occurred, and which is included in an anchor channel (ANCH), and an identifier of the error part, and specifies the data and the error part. In addition, when there has been an ARQ retransmission request (SREJ) from the PHS terminal 110, the retransmission request receiving unit 236 extracts a sequence number included in CSCH (Circuit Switching Channel) data channel (CDCH) and specifies the data.

Incidentally, when receiving ACK transmitted from the PHS terminal 110, the retransmission request receiving unit 236 deletes data corresponding to a frame identifier or a sequence number contained in the ACK from the transmission data maintaining unit 230.

When the retransmission request receiving unit 236 has received an HARQ retransmission request, the HARQ data retransmission unit 238 retransmits a frame containing the data maintained in the transmission data maintaining unit 230 and specified by a frame identifier contained in the HARQ retransmission request at prescribed frame timing as set in the wireless communication system 100.

When the retransmission request receiving unit 236 has received an ARQ retransmission request (SREJ), the ARQ data retransmission unit 240 retransmits a frame containing the data maintained in the transmission data maintaining unit 230 and specified by a sequence number contained in the ARQ retransmission request (SREJ) at prescribed frame timing as set in the wireless communication system 100.

### (PHS Terminal 110)

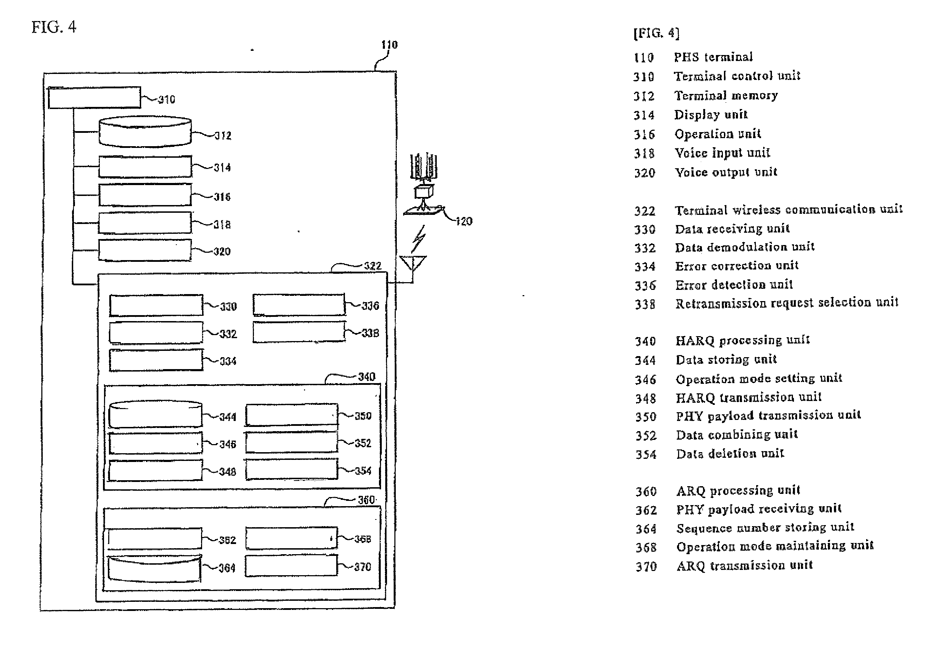

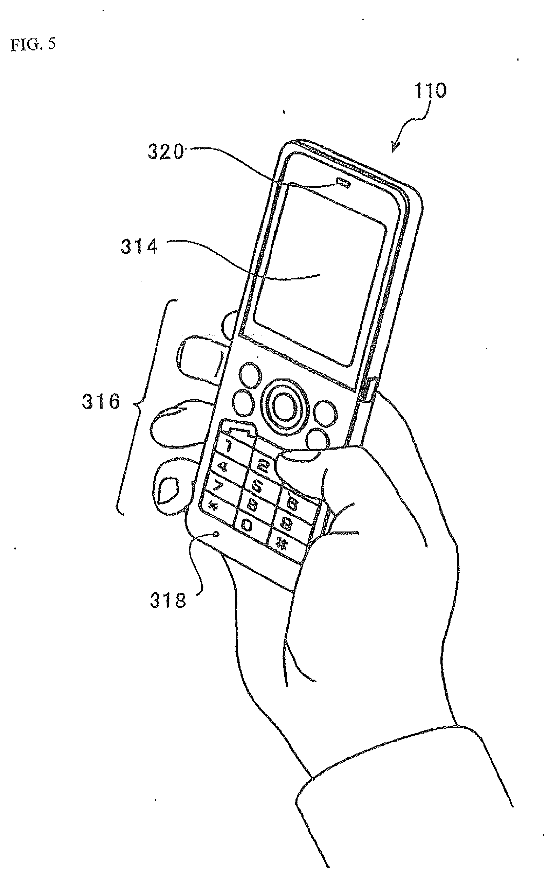

FIG. 4 is a functional block diagram showing hardware configuration of the PHS terminal 110. FIG. 5 is a perspective view showing appearance of the PHS terminal 110. The PHS terminal 110 includes a terminal control unit 310, a terminal memory 312, a display unit 314, an operation unit 316, a voice input unit 318, a voice output unit 320, and a terminal wireless communication unit 322.

The terminal control unit 310 manages and controls the PHS terminal 110 as a whole by means of a semiconductor integrated circuit including a central processing unit (CPU). In addition, the terminal control unit 310 also performs call function, mail transmitting and receiving function, imaging function, music playing function, and TV viewing function by using a program of the terminal memory 312.

The terminal memory 312 is configured by ROM, RAM, EEPROM, non-volatile RAM, flash memory, HDD, and so on. The terminal memory 312 stores programs processed in the terminal control unit 310, and voice data, etc.

The display unit 314 is configured by a liquid crystal display, EL (Electro Luminescence), and so on. The display unit 314 can display Web Browser or GUI (Graphical User Interface) of application, stored in the terminal memory 312 or provided from an application relay server (not illustrated) through the communication network 130.

The operation unit 316 is configured by switches such as a keyboard, a cross key, and a joystick. The operation unit 316 accepts user's operation input.

The voice input unit 318 is configured by voice recognition means such as a microphone. The voice input unit 318 converts user's voice input during call into an electric signal, which can be processed in the PHS terminal 110.

The voice output unit 320 is configured by a speaker. The voice output unit 320 converts call counterpart's voice signal received in the PHS terminal 110 into voice to output the voice. In addition, the unit 320 can output ringtones, operation sound of the operation unit 316, and alarm sound, etc.

The terminal wireless communication unit 322 establishes wireless communication with the base station 120 in the communication network 130 to transmit and receive data. When establishing communication, the terminal wireless communication unit 322 transmits TCCH (Timing Control Channels) including a synchronization signal to the base station 120. The base station 120 performs sampling of a synchronization symbol from the TCCH and determines transmission timing of the PHS terminal 110, in which the differential is returned to the PHS terminal 110 by using SCCH (Synchronization Control Channels).

In addition, in this embodiment, the terminal wireless communication unit 322 also functions as a data receiving unit 330, a data demodulation unit 332, an error correction unit 334, an error detection unit 336, a retransmission request selection unit 338, an HARQ processing unit 340, and an ARQ processing unit 360.

The data receiving unit 330 receives a frame (refer to FIG. 3) containing data, a frame identifier, and a sequence number transmitted from the base station 120.

The data demodulation unit 332 demodulates the frame received in the data receiving unit 330 and transfers the demodulated frame to the error correction unit 334. In addition, if the PHS terminal 110 makes an HARQ retransmission request or an ARQ retransmission request, and thereafter, the data receiving unit 330 receives a frame containing retransmission data at prescribed frame timing, the data demodulation unit 332 transfers the retransmission data of the received frame to the HARQ processing unit 340, which will be described later.

The error correction unit 334 performs error correction of the data transferred from the data demodulation unit 332 or the data combining unit 352, through CRC (Cyclic Redundancy Check Bit).

The error detection unit 336 detects an error, which could not have been corrected even by the error correction unit 334.

When the error detection unit 336 has detected an error, the retransmission request selection unit 338 selects either the HARQ processing unit 340 or the ARQ processing unit 360, which will be described later, and makes an HARQ retransmission request or an ARQ retransmission request.

In this embodiment, selecting the HARQ processing unit 340 or the ARQ processing unit 360 by means of the retransmission request selection unit 338 is performed based on whether or not a flag is standing in HC (HARQ Channel) contained in an anchor channel (ANCH) transmitted from the base station 120. In other words, if a flag is standing in HC, the retransmission request selection unit 338 selects the ARQ processing unit 360. If no flag is standing in HC, the retransmission request selection unit 338 selects the HARQ processing unit 340. A flag stands in HC in the case where channel assignment is impossible, or QoS (Quality of Service) is low.

In addition, in this embodiment, the retransmission request selection unit 338 selects the HARQ processing unit 340 prescribed times, and then selects the ARQ processing unit 360.

The retransmission request selection unit 338 generally selects the HARQ processing unit 340 having good packet error correction efficiency. However, if a flag is standing in HC of an anchor channel, or the HARQ processing unit 340 has been selected prescribed times as described above, the retransmission request selection unit 338 selects the ARQ processing unit 360.

The HARQ processing unit 340 includes a data storing unit 344, an operation mode setting unit 346, an HARQ transmission unit 348, a PHY payload transmission unit 350, a data combining unit 352, and a data deletion unit 354. In addition, in this embodiment, processes performed in the HARQ processing unit 340 are processes in a PHY layer.

The data storing unit 344 stores data (only a demodulated frame if error correction is unnecessary) demodulated by the data demodulation unit 332 and corrected by the error correction unit 334.

If the retransmission request selection unit 338 has selected the HARQ processing unit 340, the operation mode setting unit 346 sets the operation mode of the corresponding HARQ processing unit 340 to "in HARQ mode" and notifies "in HARQ mode" information to indicate the selection to the ARQ processing unit 360. The "in HARQ mode" information contains the selection of the HARQ processing unit 340 and a queue number of a queue buffer, in which data to be retransmitted are stored, in the data storing unit 344.

If, after the notification of the "in HARQ mode" information to the ARQ processing unit 360, the error detection unit 336 detects an error again in data retransmitted from the base station 120 and received in the data receiving unit 330, and the retransmission request selection unit 338 has selected the ARQ processing unit 360, the operation mode setting unit 346 sets the operation mode of the corresponding HARQ processing unit 340 to "HARQ abandonment" and notifies "HARQ abandonment" information containing the selection and a queue number of a queue buffer, in which data to be retransmitted are stored, in the data storing unit 344 to the ARQ processing unit 360.

Only if the operation mode set by the operation mode setting unit 346 is "in HARQ mode," the HARQ transmission unit 348 transmits an HARQ retransmission request (NACK) containing a frame identifier of the data, in which the error has been detected, to the base station 120.

In addition, in this embodiment, if the retransmission request selection unit 338 has selected the ARQ processing unit 360, the HARQ transmission unit 348 transmits ACK to the base station 120.

According thereto, the base station 120 recognizes that no error has been detected in the HARQ processing unit 340, in other words, the unit 340 is normal. Accordingly, since a retransmission request is transmitted only from the ARQ processing unit 360, the base station 120 can retransmit data only in response to the ARQ retransmission request.

Moreover, the HARQ transmission unit 348 transmits ACK to the base station 120 even if the error detection unit 336 had detected no error.

In this embodiment, since data in a frame unit are alternatively transmitted and received between the base stations 120 through the TDD/OFDMA scheme, an HARQ retransmission request (NACK) and ACK are transmitted through an anchor channel (ANCH) of transmission data to be transmitted to the base station 120. In this case, MCS requirement (MR) set to an identical anchor channel (ANCH) is general MCS based on adaptive modulation.

If the error detection unit 336 has detected no error, the PHY payload transmission unit 350 transmits a PHY payload (refer to FIG. 3) demodulated by the data demodulation unit 332 to the ARQ processing unit 360. If the error detection unit 336 has detected an error, the unit 350 does not transmit a PHY payload (refer to FIG. 3) to the ARQ processing unit 360.

The data combining unit 352 chase combines retransmission data contained in the frame demodulated by the data demodulation unit 332 and the data maintained in the data storing unit 344 and transmits the result to the error correction unit 334.

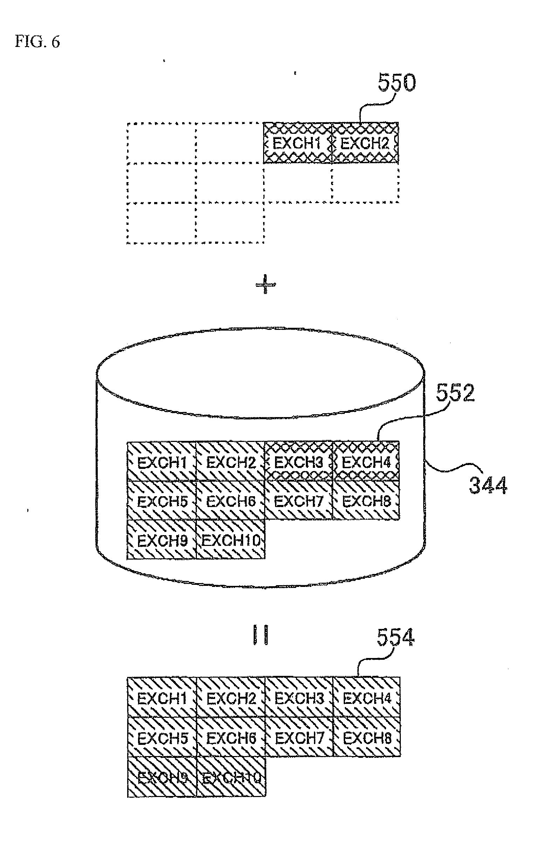

FIG. 6 is a view for explaining performance of chase combining. If an error has been detected in the data received and demodulated in the PHS terminal 110, an HARQ retransmission request (NACK) containing the error part is delivered to the base station 120, while the frame, in which the error has been detected, is not destroyed and is maintained in the data storing unit 344. And, when receiving only the error part as retransmission data 550 from the base station 120, the PHS terminal 110 combines the retransmission data 550 and data 552 being maintained in the data storing unit 344 through MRC (Maximum Ratio Combining) to generate restore data 554. In such a chase combining method, as a result of maximum ratio combining of data, SINR of a received frame is improved and thereby effectively reducing errors.

In this embodiment, combining by means of the data combining unit 352 employs chase combining, but may employ other combining methods such as IR (Incremental Redundancy) combining using a puncturing process.

If the error detection unit 336 has detected an error, and the ARQ processing unit 360 has been selected, or if the error detection unit 336 has detected no error, the data deletion unit 354 deletes the data stored in the data storing unit 344.

The ARQ processing unit 360 includes a PHY payload receiving unit 362, a sequence number storing unit 364, an operation mode maintaining unit 368, and an ARQ transmission unit 370. In addition, in this embodiment, processes performed in the ARQ processing unit 360 are processes in an MAC layer.

The PHY payload receiving unit 362 receives a PHY payload (refer to FIG. 3) transmitted from the PHY payload transmission unit 350 and detects a sequence number contained in the PHY payload.

The sequence number storing unit 364 stores the sequence number contained in the PHY payload received in the PHY payload receiving unit 362 in association with a frame identifier.

The operation mode maintaining unit 368 maintains an operation mode notified by the operation mode setting unit 346, i.e., "in HARQ mode" information or "HARQ abandonment" information.

If the error detection unit 336 has detected an error, and the ARQ processing unit 360 has been selected, the ARQ transmitting unit 370 transmits an ARQ retransmission request (SREJ) containing a sequence number of the data, in which the error has been detected, to the base station 120.

This is because if the error detection unit 336 has detected an error and the retransmission request selection unit 338 has selected the ARQ processing unit 360, the PHY payload transmission unit 350 does not transmit a PHY payload. In this case, since the PHY payload receiving unit 362 cannot detect a sequence number contained in the PHY payload (a sequence number has been missing), the ARQ transmission unit 370 detects the sequence number that could not been detected, with reference to the sequence number storing unit 364, such that the ARQ transmission unit 370 recognizes that an error has been detected in a lower PHY layer (HARQ processing unit 340).

In addition, if the operation mode maintaining unit 368 maintains "in HARQ mode" information, the ARQ transmission unit 370 does not transmit an ARQ retransmission request (SREJ) and transmits ACK to the base station 120. If "HARQ abandonment" information is maintained, an ARQ retransmission request (SREJ) is transmitted to the base station 120.

In addition, if the error detection unit 336 has detected no error, the ARQ transmission unit 370 transmits ACK to the base station 120.

In the above-described wireless communication system 100, according to a configuration in which the PHS terminal 110 includes the error detection unit 336 and the retransmission request selection unit 338, if an error is detected in data transmitted and received from the base station 120, it is possible to operate only one of the HARQ processing unit 340 and the ARQ processing unit 360. Thus, an HARQ retransmission request and an ARQ retransmission request are not repeatedly transmitted to the base station 120, which is a data transmission source. In addition, since the base station does not receive retransmission requests as a result of processing of both the requests (ARQ and HARQ), identical data are not repeatedly transmitted.

Next, a wireless communication method of performing wireless communication by using the PHS terminal 110 or the base station 120 described above will be described.

### (Wireless Communication Method)

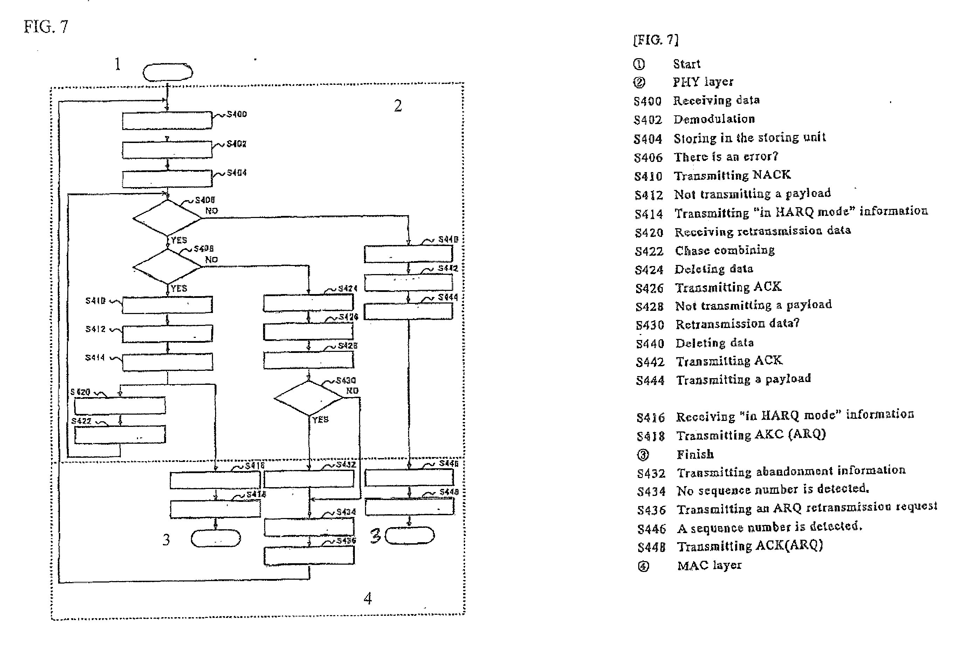

FIG. 7 is a flow chart showing a flow of processes in a wireless communication method in an embodiment of the present invention. For easy understanding, FIG. 7 shows processes of the PHS terminal 110.

Firstly, in the base station 120, the transmission data maintaining unit 230 maintains data in a frame unit in association with a frame identifier capable of specifying a frame of the data and a sequence number. The data transmission unit 234 sequentially transmits a frame containing the data, the frame identifier, and the sequence number. The data receiving unit 330 of the PHS terminal 110 receives the frame transmitted from the base station 120 (S400). The data demodulation unit 332 demodulates the frame received in S400 and transmits the demodulated frame to the error correction unit 334. If there is an error, the error correction unit 334 performs error correction through a cyclic redundancy check bit (CRC) (S402). The data storing unit 344 stores the frame, which has been demodulated or for which error correction has been performed in S402 (S404).

Moreover, the error detection unit 336 detects whether or not there is an error in the data contained in the frame, which has been demodulated or for which error correction has been performed in S402 (S406). If an error is detected, the retransmission request selection unit 338 selects one of the HARQ processing unit 340 and the ARQ processing unit 360 (S408).

If the HARQ processing unit 340 has been selected in S408, the operation mode setting unit 346 sets the operation mode of the HARQ processing unit 340 to "in HARQ mode," and the HARQ transmission unit 348 transmits an HARQ retransmission request (NACK) containing a frame identifier of the data, in which the error has been detected, to the base station 120 (S410). The PHY payload transmission unit 350 does not transmit a PHY payload to the ARQ processing unit 360 (S412). Although the PHY payload transmission unit 350 does not transmit a PHY payload to the ARQ processing unit 360 in S412, the operation mode setting unit 346 notifies the "in HARQ mode" information to the ARQ processing unit 360 (S414).

The follow-up processes (S416, S418) performed in the ARQ processing unit 360 are processes in an MAC layer. Since the HARQ transmission unit 348 has not transmitted a PHY payload to the ARQ processing unit 360 (S412), the ARQ processing unit 360 does not receive a PHY payload and has a missing (lost) sequence number. If there is such a missing sequence number, the ARQ transmission unit 370 generally transmits an ARQ retransmission request (SREJ) to the base station 120.

However, since the operation mode maintaining unit 368 maintains the "in HARQ mode" information (S416), with reference to a sequence number of data corresponding to a queue number contained in the received "in HARQ mode" information, the ARQ transmission unit 370 transmits ACK (ARQ), and not an ARQ retransmission request (SREJ), in correspondence with the sequence number, to the base station 120. Thus, the ARQ processing unit 360 of the MAC layer can obtain the sequence number of the data, which has been missing since the PHY payload has not been received, from the queue number transmitted from the HARQ transmission unit 348 of the PHY layer.

According to the configuration in which, if the HARQ processing unit 340 has been selected, the selection ("in HARQ mode" information) is notified to the ARQ processing unit 360, the ARQ processing unit 360 can clearly confirm that the HARQ processing unit 340 has been selected. In addition, since the ARQ processing unit 360, which maintains the "in HARQ mode" information, does not transmit an ARQ retransmission request to the base station 120, a retransmission request is not repeated.

On the other hand, the retransmission request receiving unit 236 of the base station 120 receives the HARQ retransmission request (NACK) that has been transmitted from the PHS terminal 110 in S410, and extracts a frame identifier of the data, which is included in an anchor channel (ANCH), and in which an error has been detected, and an identifier of the error part to specify the data and the error part. Thereafter, the HARQ data retransmission unit 238 retransmits a frame containing the data maintained in the transmission data maintaining unit 230 and specified by the frame identifier contained in the HARQ retransmission request at prescribed frame timing as set in the wireless communication system 100.

The data receiving unit 330 receives the frame containing the retransmission data transmitted from the base station 120, and the data demodulation unit 332 demodulates the frame (S420). The data combining unit 352 chase combines the retransmission data demodulated in S420 and the data maintained in the data storing unit 344 in S404 (S422) and additionally performs S406.

If the ARQ processing unit 360 has been selected in S408, the data deletion unit 354 deletes the data, which have been stored in the data storing unit 344 in S404 (S424). In addition, the HARQ transmission unit 348 transmits ACK to the base station 120 (S426). Moreover, the PHY payload transmission unit 350 does not transmit the PHY payload demodulated in the data demodulation unit 332 to the ARQ processing unit 360 (S428).

The operation mode setting unit 346 determines whether or not the data contained in the frame demodulated in the data demodulation unit 332 are retransmission data (S430). If the data are retransmission data, the unit 346 notifies "HARQ abandonment" information to the ARQ processing unit 360 (S432).

If the data contained in the demodulated frame have been retransmission data, with reference to a sequence number corresponding to a queue number contained in previously received "in HARQ mode" information, and a sequence number corresponding to a queue number contained in the "HARQ abandonment" information, the ARQ transmission unit 370 confirms abandonment of the previous "in HARQ mode" information and transmits an ARQ retransmission request (SREJ) containing the sequence number to the base station 120 (S436).

If the data contained in the demodulated frame have not been retransmission date, the ARQ processing unit 360 cannot detect the sequence number (the sequence number is missing) since a PHY payload has not been transmitted in S428. Thus, the ARQ transmission unit 370 transmits an ARQ retransmission request (SREJ) containing the sequence number to the base station (S436).

On the other hand, the retransmission request receiving unit 236 of the base station 120 receives the ARQ retransmission request (SREJ) that has been transmitted from the PHS terminal 110 in S436 and extracts a sequence number contained in CSCH (Circuit Switching Channel) data channel (CDCH) to specify the data. Thereafter, the unit 236 retransmits the data maintained in the transmission data maintaining unit 230 and specified by the sequence number contained in the ARQ retransmission request at prescribed frame timing as set in the wireless communication system 100.

The frame containing the retransmission data transmitted from the base station 120 is received again in the data receiving unit 330 (S400).

If the error detection unit 336 has detected no error in S406, the data deletion unit 354 deletes the data that has been stored in the data storing unit 344 in S404 (S440). In addition, the HARQ transmission unit 348 transmits ACK to the base station (S442). Moreover, the PHY payload transmission unit 350 transmits the PHY payload demodulated in the data demodulation unit 332 to the ARQ processing unit 360 (S444). The ARQ transmission unit 370 detects a sequence number from the PHY payload that has been received in S444 and transmits ACK to the base station 120 (S448).

In the wireless communication method described above as well, if an error is detected in received data, ARQ and HARQ are switched to effectively request data retransmission to a wireless communication device, which is a data transmission source, so that stability of wireless communication can be improved.

### (Comparative Embodiment)

Subsequently, as a comparative embodiment of the wireless communication method of performing wireless communication by using the PHS terminal 110 or the base station 120 as described above, a wireless communication method simultaneously using ARQ and HARQ will be described.

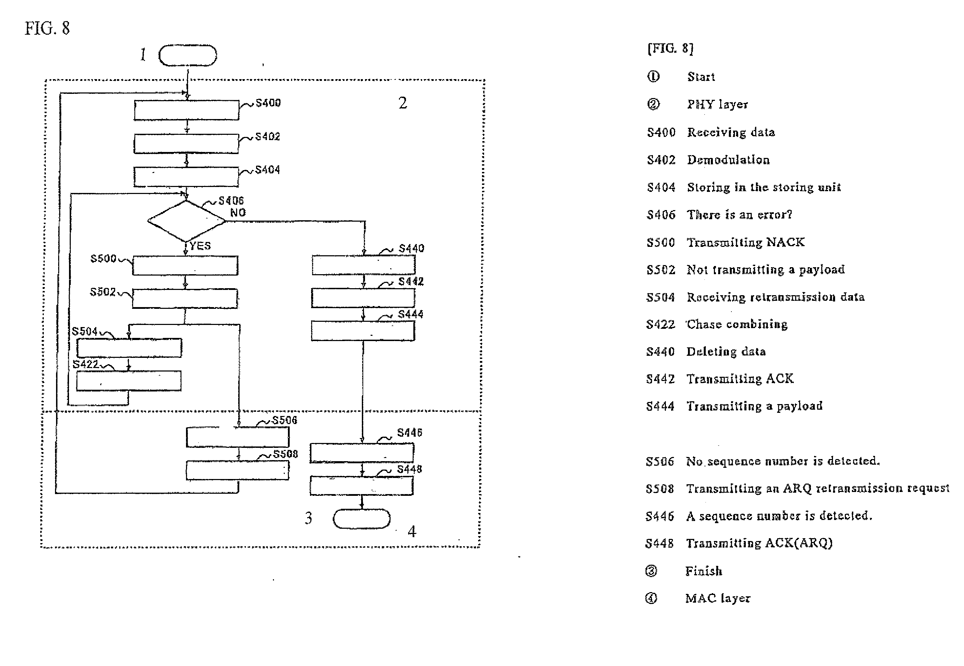

FIG. 8 is a flow chart of a flow of processes in a wireless communication method according to a comparative embodiment. Incidentally, S400 to S406, S422, and S440 to S448 described in FIG. 7 are substantially identical to those of the wireless communication method of the comparative embodiment, explanation thereof are omitted herein.

As shown in FIG. 8, if an error has been detected in S406, a data receiving device transmits NACK as a result of processing of HARQ (S500) and makes a retransmission request as a result of the HARQ processing (S504) without transmitting a PHY payload to an MAC layer, namely, a layer processing ARQ (S502). On the other hand, since the ARQ processing layer could not have received a PHY payload (S502), it cannot detect a sequence number as a result of the ARQ processing (S506) and makes a retransmission request as a result of the ARQ processing (S508).

Accordingly, the transmitting device that has transmitted data receives the retransmission request (HARQ retransmission request) in S504 and the retransmission request (ARQ retransmission request) in S510. Thus, the receiving device repeatedly transmits retransmission requests, and thereby causing redundancy. Further, since the transmitting device receives retransmission requests as a result of processing of both the requests (ARQ and HARQ), it repeatedly transmits identical data, and thereby causing redundancy.

While the preferable embodiment of the present invention has been described with reference to the accompanying drawings, it goes without saying that the present invention is not limited to the embodiment. It is apparent to one skilled in the art that various modifications and changes can be made within the scope set forth in the claims, and it should be understood that such modifications and changes fall under the technical scope of the present invention.

Incidentally, steps in the wireless communication method described in this specification do not need to be sequentially performed in the order described in the flow charts and may be performed in parallel or subroutines.

While the present invention has been described in detail with reference to a particular embodiment, it is apparent to one skilled in the art that various modifications and changes can be made without departing from the spirit and the scope of the present invention.
The present application is based on the Japanese Patent Application No. 2008-081380 filed on March 26, 2008, the disclosures of which are herein incorporated by reference.

### Industrial Applicability

The present invention is applicable to a wireless communication system, a wireless communication device, and a wireless communication method, which are capable of performing wireless communication using an automatic repeat request (ARQ) and HARQ.

## Claims

1. A wireless communication system comprising:
a first wireless communication device; and
a second wireless communication device that performs wireless communication with the first wireless communication device,
wherein the first wireless communication device comprises:
a transmission data maintaining unit that maintains data in a frame unit;
a data transmission unit that sequentially transmits the data;
a retransmission request receiving unit that receives an HARQ retransmission request or an ARQ retransmission request transmitted from the second wireless communication device;
an HARQ data retransmission unit which, if the retransmission request receiving unit has received an HARQ retransmission request, retransmits data corresponding to the HARQ retransmission request and maintained in the transmission data maintaining unit; and
an ARQ data retransmission unit which, if the retransmission request receiving unit has received an ARQ retransmission request, retransmits data corresponding to the ARQ retransmission request and maintained in the transmission data maintaining unit, and
wherein the second wireless communication device comprises:
a data receiving unit that receives data transmitted from the first wireless communication device;
a data demodulation unit that demodulates the received data;
an error detection unit that detects whether or not there is an error in the demodulated data;
an HARQ processing unit that is capable of making an HARQ retransmission request;
an ARQ processing unit that is capable of making an ARQ retransmission request; and
a retransmission request selection unit which, if the error detection unit has detected an error, selects either the HARQ processing unit or the ARQ processing unit to make an HARQ retransmission request or an HARQ retransmission request.

2. The wireless communication system according to claim 1, wherein the HARQ processing unit comprises:
an operation mode setting unit, which sets an operation mode of the HARQ processing unit to "in HARQ mode" or "HARQ abandonment," depending on which of the HARQ processing unit or the ARQ processing unit has been selected by the retransmission request selection unit, and which notifies the selection to the ARQ processing unit; and
an HARQ transmission unit which, if the operation mode is set to "in HARQ mode," transmits the HARQ retransmission request to the first wireless communication device, and
wherein the ARQ processing unit comprises:
an operation mode maintaining unit that maintains the notified operation mode; and
an ARQ transmission unit which, if the maintained operation mode is modes other than "in HARQ mode," transmits the ARQ retransmission request to the first wireless communication device.

3. A wireless communication device performing wireless communication with other wireless communication device, the wireless communication device comprising:
a data receiving unit that receives data in a frame unit transmitted from the other wireless communication device;
a data demodulation unit that demodulates the received data;
an error detection unit that detects whether or not there is an error in the demodulated data;
an HARQ processing unit that is capable of making an HARQ retransmission request;
an ARQ processing unit that is capable of making an ARQ retransmission request; and
a retransmission request selection unit which, if the error detection unit has detected an error, selects either the HARQ processing unit or the ARQ processing unit to make an HARQ retransmission request or an ARQ retransmission request.

4. The wireless communication device according to claim 3,
wherein the HARQ processing unit comprises:
an operation mode setting unit, which sets an operation mode of the ARQ processing unit to "in HARQ mode" or "HARQ abandonment," depending on which of the HARQ processing unit or the ARQ processing unit has been selected by the retransmission request selection unit, and which notifies the selection to the ARQ processing unit; and
an HARQ transmission unit which, if the set operation mode is "in HARQ mode," transmits the HARQ retransmission request to the other wireless communication device, and wherein the ARQ processing unit comprises:
an operation mode maintaining unit that maintains the notified operation mode; and
an ARQ transmission unit which, if the maintained operation mode is modes other than "in HARQ mode," transmits the ARQ retransmission request to the other wireless communication device.

5. A wireless communication method of performing wireless communication by using a first wireless communication device and a second wireless communication device that performs wireless communication with the first wireless communication device,
wherein the first wireless communication device is configured to:
maintain data in a frame unit; and
sequentially transmit the data,
wherein the second wireless communication device is configured to:
receive the transmitted data;
demodulate the received data;
detect whether or not there is an error in the demodulated data; and
if an error has been detected in the data, make an HARQ retransmission request or an ARQ retransmission request, and wherein the first wireless communication device is configured to:
receive the HARQ retransmission request or the ARQ retransmission request;
if the HARQ retransmission request has been received, retransmit the maintained data as data in response to the HARQ retransmission request; and
if the ARQ retransmission request has been received, retransmit the maintained data as data in response to the ARQ retransmission request.

6. The wireless communication system according to claim 1,
wherein the first wireless communication device is a base station, and
wherein the second wireless communication device is a mobile communication device.
